Europäisches Patentamt

(19) European Patent Office

Office européen des brevets

(11) Numéro de publication : **0 340 058 B1**

(12) **FASCICULE DE BREVET EUROPEEN**

(45) Date de publication du fascicule du brevet :
**19.06.91 Bulletin 91/25**

(51) Int. Cl.⁵ : **F16D 55/24,** F16D 55/40

(21) Numéro de dépôt : **89400914.1**

(22) Date de dépôt : **04.04.89**

(54) **Frein à disques multiples.**

(30) Priorité : **28.04.88 FR 8805653**

(43) Date de publication de la demande :
**02.11.89 Bulletin 89/44**

(45) Mention de la délivrance du brevet :
**19.06.91 Bulletin 91/25**

(84) Etats contractants désignés :
**DE FR GB IT**

(56) Documents cités :
**EP-A- 0 130 883
PATENT ABSTRACTS OF JAPAN vol. 6, no. 71
(M-126)(949), 6 mai 1982**

(73) Titulaire : **BENDIX EUROPE Services
Techniques S.A.
126 rue de Stalingrad
F-93700 Drancy (FR)**

(72) Inventeur : **Meynier, Guy
BENDIX FRANCE S.A. 126 Rue de Stalingrad
F-93700 Drancy (FR)**

(74) Mandataire : **Lejet, Christian
Bendix Europe Service Techniques Service
Brevets 126 rue de Stalingrad
F-93700 Drancy (FR)**

Jouve, 18, rue Saint-Denis, 75001 PARIS

## Description

La présente invention est relative à un frein à disques, du type comprenant au moins deux disques.

Un frein à disque unique comprend un disque solidaire d'un arbre, par exemple un arbre de roue, et deux garnitures mobiles susceptibles de serrer le disque entre elles. Dans un frein à disques multiples, un seul disque est solidaire de l'arbre, le second disque, de même que les suivants éventuels, n'est solidaire de l'arbre qu'en rotation et doit pouvoir se déplacer axialement par rapport à celui-ci lors du freinage, ce qui entraîne une construction plus compliquée, car la liaison entre le second disque et l'arbre doit à la fois permettre le déplacement relatif des pièces dans le sens axial, et transmettre des efforts de couple importants.

On a proposé (EP-A-0.130.883) de monter le second disque sur un manchon cannelé intérieurement, qui peut coulisser sur une partie du moyeu cannelée extérieurement. Il est apparu que les surfaces cannelées, dont la réalisation est coûteuse, peuvent avoir tendance à se gripper ou à s'user.

Pour améliorer la tenue des pièces, il y a intérêt à ce que les surfaces de contact, qui servent à la fois au coulissement axial et à la transmission des couples de freinage, soient le plus écartées possible de l'axe, mais on se heurte alors à des problèmes d'encombrement, de prix et de protection contre l'environnement.

L'invention a pour but de fournir un frein dans lequel la liaison coulissante entre l'arbre et le second disque soit obtenue de façon simple et peu coûteuse, tout en donnant de bonnes garanties de durée.

Pour obtenir ce résultat, l'invention fournit un frein comprenant un moyeu de roue, un disque fixe solidaire d'un moyeu de roue, un disque mobile coaxial au premier, solidaire en rotation du moyeu mais susceptible de se déplacer axialement par rapport au disque fixe, une première garniture de freinage située entre les deux disques, une deuxième garniture de freinage située du côté du premier disque qui est à l'opposé du second disque, une troisième garniture de freinage située du côté du second disque qui est à l'opposé du premier disque, et un étrier supportant les trois garnitures de freinage et pourvu de moyens permettant de serrer les garnitures sur les disques, frein qui présente pour particularités :

– que le moyeu porte au moins trois couples de paliers, ces couples étant disposés de façon régulière par par rapport à l'axe de la roue et les paliers de chaque couple ayant un axe commun parallèle à l'axe de roue,

– qu'un arbre, ou colonnette, est monté coulissant sur les deux paliers d'un couple,

– qu'un cavalier est monté solidaire en translation sur chacun desdits arbres, à peu près à mi-distance des extrémités de cet arbre ou colonnette,

– que les cavaliers sont rigidement liés au disque mobile.

La disposition de l'invention permet d'écarter de l'axe du moyeu les pièces sujettes à usure : palier et arbres-colonnettes, et donc de réduire les efforts qu'elles supportent à couple égal. Ces pièces sont des pièces simples, d'obtention facile, et dont la constance de propriétés est plus facile à garantir que celle de pièces plus complexes.

Selon une modalité avantageuse, chaque arbre ou colonnette est enfermé dans une enceinte étanche grâce, d'une part, à des manchettes souples reliant chaque palier à la face correspondante du cavalier, et, d'autre part, à des moyens d'obturation extérieure des paliers, et l'arbre ou colonnette est percé axialement de façon à permettre à la graisse contenue dans l'enceinte étanche de passer d'une extrémité à l'autre de ladite enceinte étanche.

De cette façon, les surfaces de contact et glissement sont à la fois lubrifiées par la réserve de graisse mise en place initialement, et protégées contre toute agression provenant de l'atmosphère extérieure.

L'invention va maintenant être exposée de façon plus détaillée à l'aide d'un exemple pratique de réalisation, illustré avec les dessins parmi lesquels :

Figure 1 est une coupe axiale du frein selon l'invention.

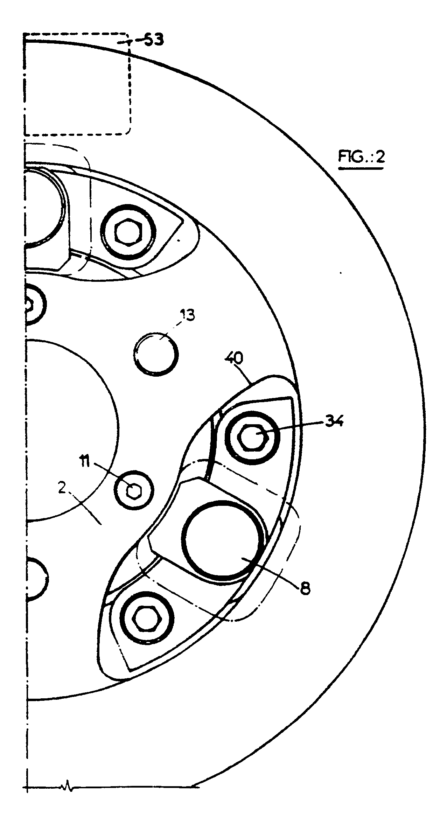

Figure 2 est une demi-vue selon la flèche II de la figure 1, le voile de roue étant supposé enlevé.

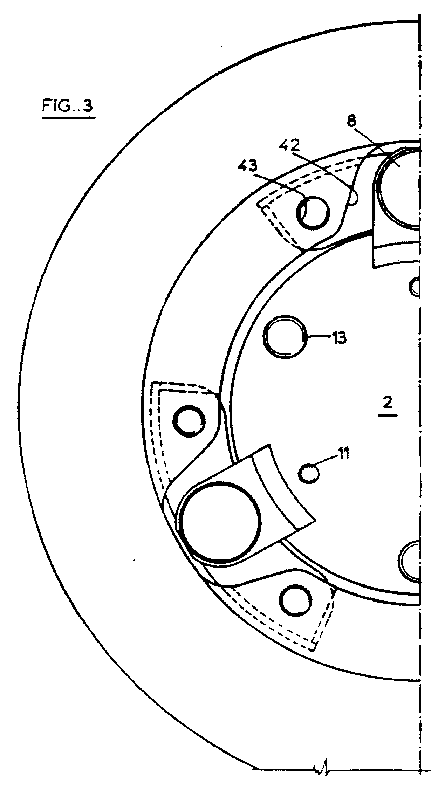

Figure 3 est une demi-vue selon la flèche III de la figure 1.

Figure 4 est une vue selon la flèche IV de la figure 1, avec arraché et coupe partielle.

Figure 5 est une vue d'un cavalier seul, parallèlement à la flèche V.

Le dispositif décrit aux dessins est destiné à équiper une roue de véhicule. La pièce centrale du dispositif est un moyeu 1, de forme particulière, et qui a pour double fonction de relier la roue à son axe, et de porter les deux disques de frein.

Le moyeu 1 comprend un plateau 2, de forme générale sensiblement circulaire, ayant en son milieu une partie plus épaisse 3, traversée par un trou 4 pourvu de cannelures 5, pour sa liaison avec l'arbre de roue 6, lequel est immobilisé par un écrou 7. Le plateau 2 porte, vers sa périphérie, trois prolongements 8 qui font saillie à la fois radialement et axialement. Les prolongements 8 sont en forme de fourche s'étendant dans un plan axial, c'est-à-dire que les extrémités de ces fourches se trouvent de part et d'autre du plan du plateau 2.

Les dessins montrent des prolongements fourchus 8 d'une seule pièce avec le plateau 2.

Il est cependant possible de prévoir qu'une dent de la fourche, ou les deux, est une pièce distincte, maintenue par vissage par exemple sur le reste du moyeu. Cette solution, un peu plus compliquée, a l'avantage de faciliter de façon appréciable le montage, notamment la mise en place des colonettes décrites ci-après.

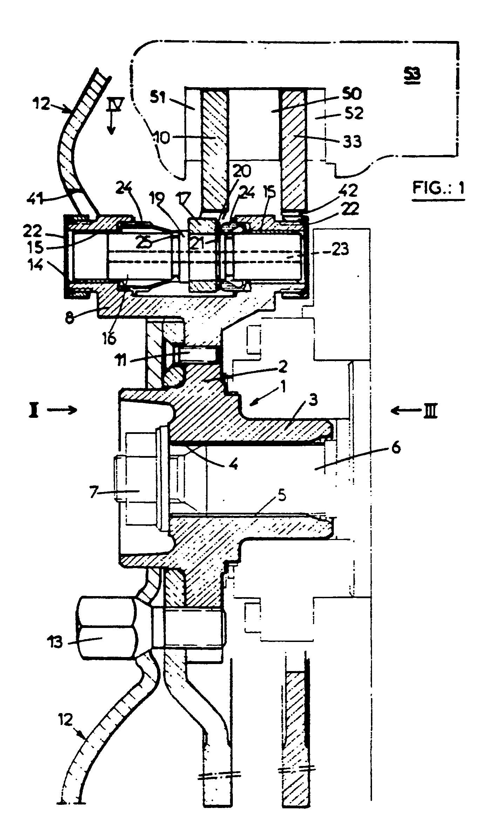

La face externe du plateau 2, c'est-à-dire celle qui est tournée vers l'extérieur du véhicule, à gauche sur la figure 1, porte le disque de freinage fixe 10 grâce à des vis 11 situées sensiblement dans le plan radial de symétrie des prolongements fourchus 8. La roue 12 est fixée sur le même plateau 2 par l'intermédiaire de vis de fixation 13, qui traversent le disque 10, et sont situées à égale distance de deux vis 11. Les vis de fixation 13, de diamètre nettement plus important que celui des vis 11 servent également à transmettre une grande partie des efforts de freinage directement du disque 10 à la roue 12. Les extrémités des prolongements fourchus 8 sont traversées par des alésages 14, dont l'axe commun est parallèle à l'axe de la roue, et dans lesquels sont montés des paliers 15.

Des pièces cylindriques 16, ou "colonnettes", sont montées de façon à pouvoir coulisser dans les paliers 15. La longueur totale d'une colonnette est un peu supérieure à la distance entre les zones médianes des paliers 15. Un cavalier 17 est monté dans la partie centrale de la colonnette 16, sans déplacement axial possible par rapport à celle-ci, car il est immobilisé entre un épaulement 19 de la colonnette, et un jonc d'arrêt 20 maintenu dans une gorge 21 de la même colonnette. Les dimensions extérieures du cavalier 17 sont telles qu'il peut se déplacer entre les deux dents de la pièce fourchue 8, en entraînant la colonnette 16. Des obturateurs vissés 22 sont prévus aux deux extrémités de l'alésage interne 14. Un perçage 23 traverse axialement la colonnette 16. On conçoit que, si le volume intérieur des alésages 14 laissé libre par la colonnette 16 est rempli de graisse, celle-ci passera d'un côté à l'autre de la colonnette par ce passage lorsque celle-ci se déplace axialement dans un sens ou dans l'autre.

Pour compléter la protection des paliers 15 et des surfaces correspondantes de la colonnette, des manchettes souples 24 prenant appui dans une gorge 25 de la colonnette et sur le bord correspondant de la partie fourchue 8, empêchent toute agression par les agents atmosphériques extérieurs.

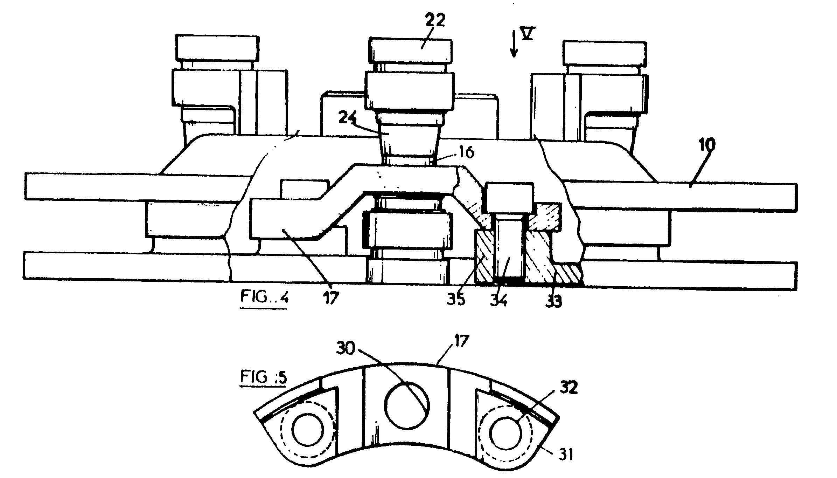

La forme du cavalier 17 est mieux visible aux figures 4 et 5. Il s'agit d'une pièce ayant une forme générale en V, dans un plan circonférentiel, avec une partie centrale traversée par un alésage 30, par lequel l'étrier est monté sur la colonnette 16, et deux ailes 31, pourvues de trous de fixation 32 par lesquels il est monté sur le disque mobile 33 par l'intermédiaire de vis 34, qui se vissent dans une partie épaissie 35 du disque 33.

La figure 5 montre par ailleurs que, en vue axiale, le cavalier 17 a la forme d'un arc de cercle concentrique au moyeu 1.

Comme le montrent les figures 1 et 4, le disque fixe 10 a, en coupe axiale, une forme incurvée, telle que le plan de sa partie active, en haut sur la figure 1, est voisin du plan médian du plateau 2 du moyeu. Le cavalier 17 se trouve, lui aussi, à peu près dans le plan médian du moyeu 2. Pour loger ces différentes pièces, le disque fixe 10 comporte une fenêtre 40, de dimension suffisante pour laisser le passage non seulement à l'étrier 17, mais encore à l'extrémité de la partie fourchue 8 de façon à permettre le montage de ce disque fixe. On notera que la roue 12 porte, quant à elle, une fenêtre 41, plus petite que la fenêtre 40, et qui permet le passage de la partie fourchue 8. Le disque mobile 33, de son côté, présente des échancrures 42 pour le passage de l'extrémité interne de la pièce fourchue 8. Les trous de fixation 43 des vis 34 se trouvent, de part et d'autre, de l'échancrure 42. Ces dispositions de structure permettent, d'une part, d'écarter les disques de frein de la roue elle-même, et d'autre part de donner aux colonnettes 16 une longueur suffisante pour un bon coulissement.

On a représenté en tirets les trois garnitures de freinage 50, 51, 52 et l'étrier 53 qui les porte (figure 1).

**Revendications**

1. Frein comprenant un moyeu de roue (1), un disque fixe (10) solidaire d'un moyeu de roue, un disque mobile (33) coaxial au premier, solidaire en rotation du moyeu mais susceptible de se déplacer axialement par rapport au disque fixe, une première garniture de freinage (50) située entre les deux disques, une deuxième garniture de freinage (51) située du côté du premier disque qui est à l'opposé du second disque, une troisième garniture de freinage (52) située du côté du second disque qui est à l'opposé du premier disque, et un étrier (53) supportant les trois garnitures de freinage et pourvu de moyens permettant de serrer les garnitures sur les disques, caractérisé en ce que le moyeu (1) porte au moins trois couples de paliers (15), ces couples étant disposés de façon régulière par rapport à l'axe de la roue et les paliers de chaque couple ayant un axe commun parallèle à l'axe de roue, en ce qu'un arbre, ou colonnette (16), est monté coulissant sur les deux paliers d'un couple, en ce qu'un cavalier (17) est monté solidaire en translation sur chacun desdits arbres, à peu près à mi-distance des extrémités de cet arbre ou colonnette, et en ce que les cavaliers (17) sont rigidement liés au disque mobile (33).

2. Frein selon la revendication 1, caractérisé en ce que chaque arbre ou colonnette (16) est enfermé dans une enceinte étanche grâce, d'une part, à des manchettes souples (24) reliant chaque palier à la face correspondante du cavalier, et d'autre part, à des moyens d'obturation extérieure (22) des paliers (15), et en ce que l'arbre ou colonnette (16) présente un perçage axial (23) de façon à permettre à la graisse contenue dans l'enceinte étanche de passer d'une extrémité à l'autre de ladite enceinte étanche.

3. Frein selon la revendication 1 ou 2, caractérisé en ce que le moyeu (1) comprend un plateau central (2) qui porte les couples de paliers (15) par l'intermédiaire d'un prolongement (8) en forme de fourche.

4. Frein selon la revendication 3, caractérisé en ce que le prolongement (8) en forme de fourche est d'une seule pièce avec le reste du moyeu.

5. Frein selon la revendication 4, caractérisé en ce qu'au moins une dent du prolongement (8) en forme de fourche est une pièce distincte, fixée sur le reste du moyeu.

## Claims

1. Brake comprising a wheel hub (1), a stationary disc (10) fixed to a wheel hub, a movable disc (33) coaxial relative to the first and integral with the hub in terms of rotation, but capable of moving axially in relation to the stationary disc, a first brake lining (50) located between the two discs, a second brake lining (51) located on the side of the first disc opposite the second disc, a third brake lining (52) located on the side of the second disc opposite the first disc, and a caliper (53) supporting the three brake linings and equipped with means making it possible to clamp the linings on the discs, characterized in that the hub (1) carries at least three pairs of bearings (15), these pairs being arranged uniformly relative to the axis, and the bearings of each pair having a common axis parallel to the wheel axis, in that a shaft or column (16) is mounted slideably on the two bearings of a pair, in that a hanger (17) is mounted fixedly in terms of translational movement on each of the said shafts approximately half-way between the ends of this shaft or column, and in that the hangers (17) are connected rigidly to the movable disc (33).

2. Brake according to Claim 1, characterized in that each shaft or column (16) is enclosed in a sealed chamber, on the one hand by means of flexible collars (24) connecting each bearing to the corresponding face of the hanger and, on the other hand, by means for the external sealing (22) of the bearings (15), and in that the shaft or column (16) has an axial bore (23) so as to allow the grease contained in the sealed chamber to pass from one end of the said sealed chamber to the other.

3. Brake according to Claim 1 or 2, characterized in that the hub (1) comprises a central plate (2) which carries the pairs of bearings (15) by means of an extension (8) in the form of a fork.

4. Brake according to Claim 3, characterized in that the extension (8) in the form of a fork is in one piece with the rest of the hub.

5. Brake according to Claim 4, characterized in that at least one tooth of the extension (8) in the form of a fork is a separate piece fastened to the rest of the

hub.

## Ansprüche

1. Bremse mit einer Radnabe (1), einer mit einer Radnabe fest verbundenen festen Scheibe (10), einer zu der ersten Scheibe koaxialen beweglichen Scheibe (33), die mit der Nabe drehfest verbunden ist, aber dazu geeignet ist, sich in Bezug auf die feste Scheibe axial zu verschieben, mit einem zwischen den beiden Scheiben gelegenen ersten Bremsbelag (50), einem zweiten Bremsbelag (51), der auf der der zweiten Scheibe abgewandten Seite der ersten Scheibe angeordnet ist, einem dritten Bremsbelag (52), der auf der der ersten Scheibe abgewandten Seite der zweiten Scheibe gelegen ist, sowie mit einem Sattel (53), der die drei Brembeläge trägt und mit Mitteln versehen ist, die ein Anspannen der Bremsbeläge gegen die Scheiben ermöglichen, dadurch gekennzeichnet, daß die Nabe (1) wenigstens drei Lagerpaare (15) trägt, wobei diese Paare in Bezug auf die Achse des Rades gleichmäßig angeordnet sind und die Lager jedes Paares eine gemeinsame, zu der Radachse parallele Achse aufweisen, daß eine Welle bzw. ein Schaft (16) auf den beiden Lagern eines Paares gleitend gelagert ist, daß ein Reiter (17) auf jeder der genannten Wellen ungefähr auf halbem Abstand zwischen den Enden dieser Welle bzw. dieses Schaftes translationsfest gelagert ist und daß die Reiter (17) mit der beweglichen Scheibe (33) starr verbunden sind.

2. Bremse nach Anspruch 1, dadurch gekennzeichnet, daß jede Welle bzw. jeder Schaft (16) in einer dichten Kammer über biegsame Manschetten (24) einerseits, die jedes Lager mit der entsprechenden Fläche des Reiters verbinden, und über Mittel (22) für das Verschließen der Lager (15) nach Außen andererseits eingeschlossen ist und daß die Welle bzw. der Schaft (16) eine axiale Bohrung (23) aufweist, so daß das in der dichten Kammer enthaltene Fett von einem Ende zum anderen Ende der genannten dichten Kammer wandern kann.

3. Bremse nach Anspruch 1 oder 2, dadurch gekennzeichnet, daß die Nabe (1) eine zentrale Platte (2), die die Lagerpaare (15) über eine gabelförmige Verlängerung (8) trägt, umfaßt.

4. Bremse nach Anspruch 3, dadurch gekennzeichnet, daß die gabelförmige Verlängerung (8) aus einem einzigen Stück mit dem übrigen Teil der Nabe besteht.

5. Bremse nach Anspruch 4, dadurch gekennzeichnet, daß wenigstens ein Zahn der gabelförmigen Verlängerung (8) aus einem getrennten Teil besteht, der auf der übrigen Nabe befestigt ist.

FIG.: 1

FIG.:2

FIG..3

FIG. 4

FIG. 5

EP 0 340 058 B1